(19) Europäisches Patentamt
European Patent Office
Office européen des brevets

(11) **EP 4 054 906 B1**

(12) **FASCICULE DE BREVET EUROPEEN**

(45) Date de publication et mention
de la délivrance du brevet:
**01.01.2025 Bulletin 2025/01**

(21) Numéro de dépôt: **20801267.4**

(22) Date de dépôt: **05.11.2020**

(51) Classification Internationale des Brevets (IPC):
**B60T 8/17** *(2006.01)* **B60T 8/32** *(2006.01)*

(52) Classification Coopérative des Brevets (CPC):
**B60T 8/1703; B60T 8/325; B64C 25/426**

(86) Numéro de dépôt international:
**PCT/EP2020/081162**

(87) Numéro de publication internationale:
**WO 2021/089714 (14.05.2021 Gazette 2021/19)**

(54) **PROCEDE DE FREINAGE D'AERONEF, COMPRENANT UNE CORRECTION DYNAMIQUE DE LA COMMANDE DE FREINAGE**

FLUGZEUGBREMSVERFAHREN MIT DYNAMISCHER KORREKTUR DES BREMSBEFEHLS

AIRCRAFT BRAKING METHOD COMPRISING A DYNAMIC CORRECTION OF THE BRAKING COMMAND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.11.2019 FR 1912531**

(43) Date de publication de la demande:
**14.09.2022 Bulletin 2022/37**

(73) Titulaire: **Safran Landing Systems**
**78140 Vélizy-Villacoublay (FR)**

(72) Inventeur: **BONIGEN, François**
**77550 MOISSY-CRAMAYEL (FR)**

(74) Mandataire: **Cabinet Boettcher**
**5, rue de Vienne**
**75008 Paris (FR)**

(56) Documents cités:
**EP-A1- 2 853 487     WO-A1-2015/025131**
**FR-A1- 3 008 368**

EP 4 054 906 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne le domaine des procédés de freinage d'aéronef, comprenant une correction dynamique de la commande de freinage.

ARRIERE PLAN DE L'INVENTION

Un aéronef moderne, par exemple un avion ou un hélicoptère, comporte classiquement un système de freinage au sol de certaines roues dites « freinées » de l'aéronef. Le système de freinage comprend un ou des calculateurs de freinage et des freins qui équipent chacun l'une des roues freinées.

Chaque frein comprend au moins un organe de friction, fabriqué par exemple en acier ou en carbone, et un ou des actionneurs de freinage qui sont des actionneurs hydrauliques (on parle alors d'un « système de freinage hydraulique ») ou électromécaniques (on parle alors d'un « système de freinage électrique »).

Dans le cas d'un avion, chaque frein comprend généralement plusieurs actionneurs et une pile de disques de carbone.

Dans le cas d'un hélicoptère, le brevet FR 3 007 096 B1 décrit un frein à un seul disque tournant avec la roue freinée, le disque étant associé à un étrier qui vient chevaucher le disque et dont les mors reçoivent deux plaquettes, dont une est montée mobile pour pouvoir pincer le disque entre les deux plaquettes au moyen d'un unique actionneur de freinage. EP2853487A1 divulgue un système pour un aéronef qui détermine si une condition de freinage fort et si une condition de vitesse élevée existe et met en oeuvre différent profils de freinage. 1

Lorsqu'un pilote de l'aéronef appuie sur une pédale de freinage située dans le cockpit, il produit une consigne de freinage dite manuelle qui dépend de l'enfoncement de déflexion conférée à la pédale de freinage. Cette consigne de freinage manuelle est transmise au calculateur de freinage qui génère une commande de freinage manuelle à partir de la consigne de freinage manuelle.

De même, lorsque le freinage est commandé par une fonction de freinage automatique, une consigne de freinage automatique est transmise au calculateur de freinage qui génère une commande de freinage automatique.

La commande de freinage, manuelle ou automatique, est utilisée pour piloter les actionneurs de freinage de sorte que chaque frein exerce sur la roue freinée associée un couple de freinage qui freine la roue freinée et ralentit ainsi l'aéronef.

OBJET DE L'INVENTION

L'invention a pour objet d'optimiser la commande de freinage, dans le but de limiter les risques d'endommagement de la structure des freins tout en maintenant la performance de freinage globale attendue.

RESUME DE L'INVENTION

En vue de la réalisation de ce but, on propose un procédé de freinage d'au moins une roue d'un aéronef, la roue étant munie d'un frein comportant au moins un actionneur de freinage, comprenant les étapes de :

- générer une commande de freinage à partir d'une consigne de freinage ;
- estimer et/ou mesurer une vitesse de la roue ;
- appliquer une correction dynamique sur la commande de freinage, la correction dynamique étant fonction de la commande de freinage et de la vitesse de la roue, la correction dynamique comprenant l'étape de produire une commande de freinage corrigée supérieure à la commande de freinage lorsque la vitesse de la roue est supérieure ou égale à un seuil de vitesse prédéterminé, puis l'étape de réduire la commande de freinage corrigée lorsque la vitesse de la roue devient inférieure au seuil de vitesse prédéterminée, de sorte que la commande de freinage corrigée devient inférieure à la commande de freinage ;
- piloter l'actionneur de freinage du frein de la roue en utilisant la commande de freinage corrigée.

Des analyses poussées, réalisées à partir des résultats de très nombreux tests de freinage, ont permis de constater que, lors d'un freinage, lorsqu'une commande de freinage constante est utilisée, le niveau du couple de freinage effectivement exercé par le frein sur la roue est directement lié à la vitesse de la roue. Le couple de freinage effectivement exercé par le frein sur la roue est plus important à basse vitesse et plus faible à vitesse élevée.

Ainsi, à vitesse élevée, les performances des procédés de freinage de l'art antérieur ne sont pas optimales, et à basse vitesse, il existe un risque de dégradation des équipements du frein.

Au contraire, dans le procédé de freinage selon l'invention, on applique une correction dynamique qui dépend de la commande de freinage et de la vitesse de la roue. La correction dynamique permet de compenser la commande de freinage à vitesse élevée, et donc d'améliorer les performances du freinage, et de limiter la commande de freinage à vitesse faible, et donc d'augmenter la durée de vie des freins de l'aéronef et de réduire le risque d'endommagement de la structure des freins, en particulier celle du rotor.

On propose de plus un procédé de freinage tel que celui qui vient d'être décrit, dans lequel la correction dynamique consiste à multiplier la commande de freinage par un coefficient de correction qui dépend de la commande de freinage et de la vitesse de la roue.

On propose de plus un procédé de freinage tel que celui qui vient d'être décrit, dans lequel, pour une commande de freinage donnée, lorsque la vitesse de la roue est supérieure ou égale au seuil de vitesse prédéterminé, le coefficient de correction a une valeur constante qui dépend uniquement de la commande de freinage donnée.

On propose en outre un procédé de freinage tel que celui qui vient d'être décrit, dans lequel la valeur constante est une fonction croissante de la commande de freinage.

On propose de plus un procédé de freinage tel que celui qui vient d'être décrit, dans lequel le coefficient de correction est borné par un coefficient de correction minimal et par un coefficient de correction maximal.

On propose aussi un procédé de freinage tel que celui qui vient d'être décrit, dans lequel, pour une commande de freinage donnée, lorsque la vitesse de la roue est inférieure au seuil de vitesse prédéterminé, le coefficient de correction est une fonction linéaire croissante de la vitesse de la roue.

On propose de plus un procédé de freinage tel que celui qui vient d'être décrit, dans lequel la pente de la fonction linéaire est une fonction croissante de la commande de freinage.

On propose en outre un procédé de freinage tel que celui qui vient d'être décrit, dans lequel une valeur du coefficient de correction, à vitesse de la roue nulle, est une fonction décroissante de la commande de freinage.

On propose de plus un procédé de freinage tel que celui qui vient d'être décrit, dans lequel, quelle que soit la commande de freinage, la fonction linéaire passe par un même point défini par une valeur de vitesse de roue prédéfinie et une valeur de coefficient prédéfinie.

On propose de plus un procédé de freinage tel que celui qui vient d'être décrit, dans lequel la valeur de coefficient prédéfinie est égale à 1.

L'invention sera mieux comprise à la lumière de la description qui suit d'un mode de mise en oeuvre particulier non limitatif de l'invention.

BREVE DESCRIPTION DES DESSINS

Il sera fait référence aux dessins annexés, parmi lesquels :

- la figure 1 est un graphique comprenant des courbes de couple de freinage en fonction du temps ;
- la figure 2 est un graphique comprenant des courbes de couple de freinage en fonction de la vitesse d'une roue ;
- la figure 3 représente un système de freinage électrique dans lequel est mis en oeuvre le procédé de freinage selon l'invention ;
- la figure 4 représente des étapes du procédé de freinage selon l'invention ;
- la figure 5 représente un bloc fonctionnel limiteur/-compensateur ;
- la figure 6 est un graphique comprenant des courbes d'un coefficient de correction en fonction de la vitesse de la roue.

DESCRIPTION DETAILLEE DE L'INVENTION

Dans le cadre du développement d'un nouveau système de freinage électrique pour un hélicoptère, de nombreux tests de freinage ont été effectués, et des analyses particulièrement poussées ont été réalisées sur les résultats de ces tests.

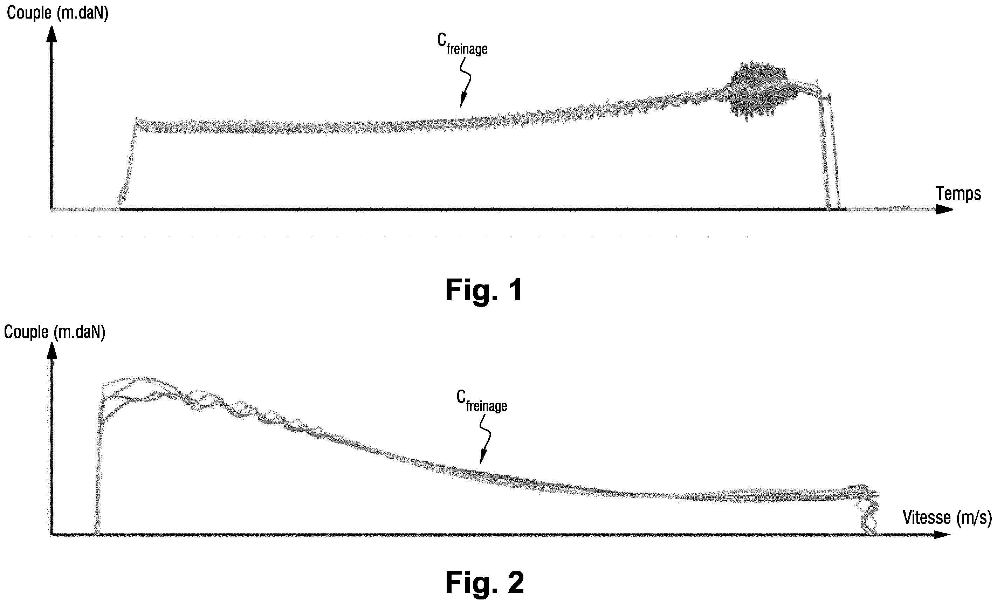

En référence à la figure 1, ces analyses ont permis de constater que, lors d'un freinage, lorsqu'une commande d'effort de freinage constant (manuelle ou automatique) est utilisée pour piloter l'actionneur de freinage du frein d'une roue, le couple de freinage $C_{freinage}$ effectivement exercé par le frein augmente au cours du freinage.

En référence à la figure 2, ces analyses ont aussi permis de montrer que le niveau du couple de freinage $C_{freinage}$ effectivement exercé est directement lié à la vitesse de la roue. Le couple de freinage effectivement exercé par le frein sur la roue est plus important à basse vitesse et plus faible à vitesse élevée. Cette évolution du couple de freinage traduit une variation du coefficient d'efficacité de freinage « $\mu$ » en fonction de la vitesse.

La variation du couple de freinage lors d'un freinage à commande d'effort de freinage constant n'est pas optimale.

En effet, à vitesse élevée, le couple de freinage moyen observé est constant mais éloigné du couple de freinage maximum admissible. Un effort de freinage plus important permettrait d'utiliser la marge restante et d'accroître les performances du freinage. A basse vitesse, le couple de freinage moyen observé augmente lorsque la vitesse de la roue diminue, et peut devenir supérieur au couple de freinage maximum admissible. Cette situation risque de provoquer la rupture d'un composant structurel du frein. Plus la commande d'effort de freinage est élevée, plus le risque augmente.

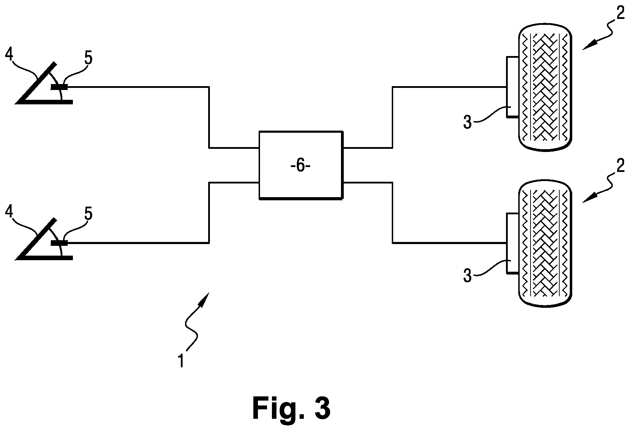

En référence à la figure 3, l'invention est ici mise en oeuvre dans un système de freinage électrique 1 d'un hélicoptère, dans le but d'optimiser le couple de freinage pour réduire le risque d'endommagement de la structure du frein, et de maintenir le niveau de performance escompté.

L'hélicoptère comprend deux roues avant et deux roues principales. Les deux roues principales sont des roues freinées 2.

Le système de freinage électrique 1 comprend deux freins 3 associés chacun à l'une des roues 2.

Chaque frein 3 comprend un actionneur de freinage qui est un actionneur électromécanique, ainsi qu'un disque, un étrier, et des plaquettes. L'actionneur de freinage agit sur une plaquette mobile pour pincer le disque entre les deux plaquettes.

Chaque frein 3 produit ainsi un couple de freinage pour freiner la roue 2 associée.

Le freinage peut être commandé par des pédales de freinage 4 situées dans le cockpit de l'hélicoptère. Chaque pédale de freinage 4 est reliée à un capteur d'enfoncement 5 qui mesure une déflexion de la pédale de freinage 4 associée.

Le système de freinage électrique 1 comprend de plus un calculateur de freinage 6 qui est relié aux capteurs d'enfoncement 5.

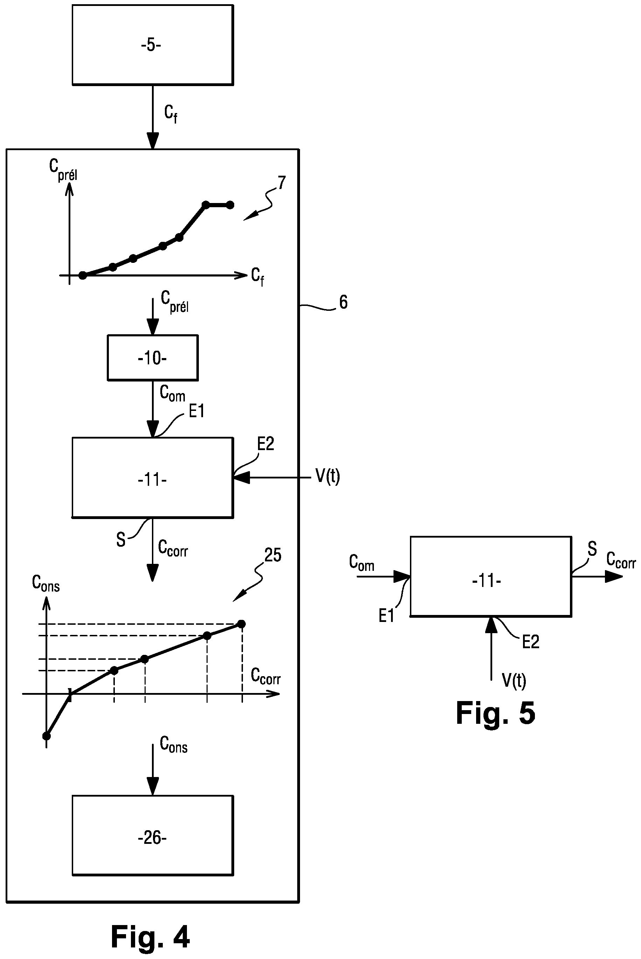

On décrit maintenant plus en détail le procédé de freinage selon l'invention, en référence aux figures 4 et 5.

Lorsqu'un pilote de l'hélicoptère appuie sur une pédale de freinage 4 pour freiner l'hélicoptère, le capteur d'enfoncement 5 associé mesure une déflexion de la pédale de freinage 4 et produit ainsi une consigne de freinage $C_f$.

Le calculateur de freinage 6 acquiert la consigne de freinage $C_f$ et génère, à partir de la consigne de freinage $C_f$, une commande de freinage préliminaire $C_{prél}$ pour le frein 3 d'une roue 2. La commande de freinage préliminaire $C_{prél}$ est ici une commande en effort.

Comme on le voit sur la figure 4, la commande de freinage préliminaire $C_{prél}$ dépend de la consigne de freinage $C_f$ (et donc de la mesure de la déflexion) selon une première courbe prédéterminée 7.

Le calculateur de freinage 6 réalise des traitements sur la commande de freinage préliminaire $C_{prél}$. Les traitements comportent la mise en oeuvre d'une pluralité de blocs fonctionnels, qui comprennent en particulier un limiteur de pente 10 et un limiteur/compensateur 11.

La commande de freinage préliminaire $C_{prél}$ est appliquée sur une entrée du limiteur de pente 10. Le limiteur de pente 10 permet de limiter un pic d'effort survenant, au début du freinage, au moment de l'application de l'effort de freinage par l'actionneur de freinage.

Une commande de freinage $C_{om}$ est ainsi générée en sortie du limiteur de pente 10.

La commande de freinage $C_{om}$ est alors appliquée sur une première entrée E1 du limiteur/compensateur 11. Le limiteur/compensateur 11 comprend une deuxième entrée E2 via laquelle il acquiert, en temps réel, une vitesse $V(t)$ de la roue 2.

Cette vitesse $V(t)$ de la roue 2 est ici estimée à partir d'une mesure de la vitesse au sol de l'hélicoptère. Bien sûr, la vitesse de la roue 2 pourrait être obtenue différemment, par exemple en mesurant directement la vitesse de la roue 2 grâce à un tachymètre monté sur la roue 2.

Le limiteur/compensateur 11 applique une correction dynamique sur la commande de freinage $C_{om}$.

La correction dynamique a pour but de faire en sorte que le frein 3 exerce sur la roue 2, en réponse à la commande de freinage $C_{om}$, un couple de freinage qui soit effectivement constant quelle que soit la vitesse de la roue 2.

La correction dynamique est fonction de la commande de freinage et de la vitesse de la roue 2.

La correction dynamique consiste, au début du freinage, lorsque la vitesse $V(t)$ de la roue 2 est supérieure ou égale à un seuil de vitesse prédéterminé, à produire une commande de freinage corrigée $C_{corr}$ supérieure à la commande de freinage $C_{om}$.

Puis, lorsque la vitesse $V(t)$ de la roue 2 devient inférieure au seuil de vitesse prédéterminée, la correction dynamique consiste à réduire la commande de freinage corrigée $C_{corr}$ de sorte que la commande de freinage corrigée $C_{corr}$ devienne inférieure à la commande de freinage $C_{om}$.

La commande de freinage corrigée $C_{corr}$ est produite sur la sortie S du limiteur/compensateur 11.

La correction dynamique consiste à multiplier la commande de freinage $C_{om}$ par un coefficient de correction $C_c$ qui dépend de la commande de freinage $C_{om}$ et de la vitesse $V(t)$ de la roue 2.

On a donc :

$$C_{corr} = C_c(C_{om}, V(t)) \times C_{om},$$

où $C_{corr}$ est la commande de freinage corrigée, $C_{om}$ est la commande de freinage, $V(t)$ est la vitesse de la roue 2 et $C_c(C_{om}, V(t))$ est le coefficient de correction qui dépend de la commande de freinage $C_{om}$ et de la vitesse $V(t)$ de la roue 2.

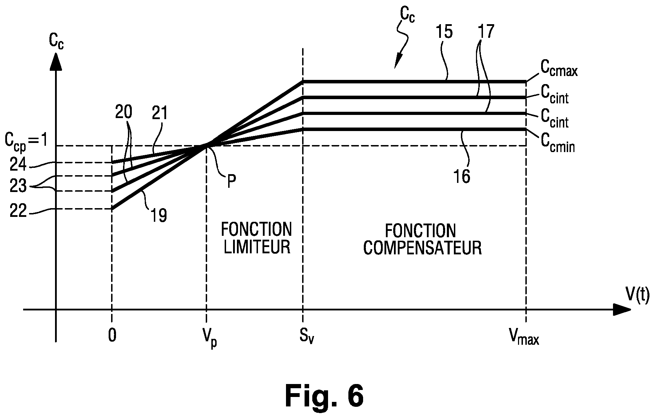

En référence à la figure 6, pour une commande de freinage $C_{om}$ donnée, lorsque la vitesse $V(t)$ de la roue 2 est supérieure ou égale au seuil de vitesse prédéterminé $S_v$, le coefficient de correction $C_c$ a une valeur constante qui dépend uniquement de la commande de freinage $C_{om}$ donnée. Cette valeur constante est une fonction croissante de la commande de freinage $C_{om}$.

La portion de courbe 15 correspond à une commande de freinage maximale, la portion de courbe 16 à une commande de freinage minimale, et les portions de courbe 17 à des commandes de freinage intermédiaires comprises entre la commande de freinage maximale et la commande de freinage minimale. Ici, la commande de freinage minimale est la commande de freinage au-dessous de laquelle la correction dynamique n'est pas mise en oeuvre, et la commande de freinage maximale est la commande de freinage au-dessus de laquelle la correction dynamique n'est pas mise en oeuvre.

On voit bien que le coefficient de correction maximal $C_{cmax}$, correspondant à la commande de freinage maximale, est supérieur aux coefficients de correction intermédiaires $C_{cint}$, correspondant aux commandes de freinage intermédiaires, qui sont eux-mêmes supérieurs au coefficient de correction minimal $C_{cmin}$, correspondant à la commande de freinage minimale.

Le coefficient de correction $C_c$ est donc borné par le coefficient de correction minimal $C_{cmin}$ et par le coefficient de correction maximal $C_{cmax}$ ce qui permet d'éviter qu'une panne du correcteur ne conduise à une commande de freinage corrigée trop faible ou trop importante.

Pour une commande de freinage $C_{om}$ donnée, lorsque la vitesse $V(t)$ de la roue 2 est inférieure au seuil

de vitesse prédéterminé $S_v$, le coefficient de correction $C_c$ est une fonction linéaire croissante de la vitesse de la roue 2.

La pente de la fonction linéaire est une fonction croissante de la commande de freinage $C_{om}$.

On voit sur la figure 6 que la pente de la fonction linéaire 19, correspondant à la commande de freinage maximale, est supérieure aux pentes des fonctions linéaires 20, correspondant aux commandes de freinage intermédiaires, qui sont elles-mêmes supérieures à la pente de la fonction linéaire 21, correspondant à la commande de freinage minimale.

On note aussi qu'une valeur du coefficient de correction $C_c$, à vitesse $V(t)$ nulle, est une fonction décroissante de la commande de freinage $C_{om}$.

Ainsi, la valeur 22 du coefficient de correction $C_c$ à vitesse $V(t)$ nulle, pour la commande de freinage maximale, est inférieure aux valeurs 23 du coefficient de correction $C_c$ à vitesse $V(t)$ nulle, pour les commandes de freinage intermédiaires, qui sont elles-mêmes inférieures à la valeur 24 du coefficient de correction $C_c$ à vitesse $V(t)$ nulle, pour la commande de freinage minimale.

On voit aussi que, quelle que soit la commande de freinage, la fonction linéaire 19, 20, 21 passe par un même point P défini par une valeur de vitesse de roue prédéfinie $V_p$ et une valeur de coefficient de correction prédéfinie $C_{cp}$.

Le seuil de vitesse prédéterminé $S_v$ est par exemple égal à 11m/s. Le seuil de vitesse prédéterminé peut être influencé par la valeur de la commande de freinage et par la valeur de vitesse de roue prédéfinie.

La valeur du coefficient de correction prédéfinie $C_{cp}$ est ici égale à 1.

La commande de freinage corrigée $C_{corr}$ est alors transformée en une consigne de position $C_{ons}$. La consigne de position $C_{ons}$ dépend de la commande de freinage corrigée selon une deuxième courbe prédéterminée 25. La consigne de position $C_{ons}$ est une valeur de position linéaire du poussoir de l'actionneur de freinage du frein 3 de la roue 2. Le calculateur de freinage 6 utilise des mesures de cette position linéaire, fournies par un capteur de positions situé sur l'actionneur de freinage, et met en oeuvre un asservissement 26 pour commander la position linéaire du poussoir de l'actionneur de freinage.

Le calculateur de freinage 6 pilote donc l'actionneur de freinage du frein 3 de la roue 2 en utilisant la commande de freinage corrigée $C_{corr}$.

On note ici que le procédé de freinage selon l'invention ne met pas en oeuvre d'asservissement en couple ou en effort. La commande de freinage et la commande de freinage corrigée sont des commandes en effort, mais aucune mesure de couple ou d'effort n'est effectuée. Le procédé de freinage selon l'invention ne nécessite donc pas de capteur de couple ou d'effort.

On précise aussi que la mise en place de la solution technique a nécessité deux étapes distinctes.

Au cours d'une première étape, la caractérisation de nombreux fichiers de données d'essais de freinage à commande d'effort de freinage constant a permis de construire une modélisation de l'évolution du couple en fonction de la vitesse, et a permis d'identifier le seuil de vitesse $S_v$. Cette modélisation est indépendante de la vitesse initiale de freinage.

En-dessous de $S_v$, le couple moyen augmente au fur et à mesure que la vitesse décroît. Il faut donc limiter cette augmentation, et on met en oeuvre une fonction de limiteur.

Au-dessus de $S_v$, la stabilité du couple moyen est acceptable. Néanmoins, le couple moyen est inférieur au couple moyen global du freinage (à cause du phénomène précédent). Il faut donc l'augmenter pour compenser la diminution de performance due à la fonction limiteur. On met donc en oeuvre une fonction de compensateur.

Au cours d'une deuxième étape, une fois le modèle établi, le coefficient de correction a été construit afin de s'adapter dynamiquement à la vitesse de roue, mais aussi à la commande de freinage, car le niveau de compensation et/ou limiteur à appliquer est dépendant de la demande faite par le pilote ou l'avionique.

Bien entendu, l'invention n'est pas limitée au mode de réalisation décrit mais englobe toute variante entrant dans le champ de l'invention telle que définie par les revendications.

On a décrit ici que le calculateur de freinage produit une commande de freinage à destination d'une roue, et que la commande de freinage est corrigée selon une correction dynamique qui est fonction de la commande de freinage et de la vitesse de la roue. La commande de freinage pourrait bien sûr être une commande globale à destination de plusieurs roues. De même, la vitesse utilisée pourrait être une vitesse (mesurée ou estimée) représentative de la vitesse de plusieurs roues (par exemple une moyenne des vitesses de ces roues).

L'architecture du système de freinage dans lequel est mis en oeuvre l'invention peut bien sûr être différente de celle présentée ici. Le système de freinage n'est pas nécessairement un système de freinage électrique, mais pourrait être par exemple un système de freinage hydraulique (auquel cas la correction est par exemple réalisée sur la pression hydraulique et non sur une commande de freinage destinée à être transformée en une consigne de position).

## Revendications

1. Procédé de freinage d'au moins une roue (2) d'un aéronef, la roue étant munie d'un frein (3) comportant au moins un actionneur de freinage, comprenant les étapes de :

    - générer une commande de freinage ($C_{om}$) à

partir d'une consigne de freinage ($C_f$) ;
- estimer et/ou mesurer une vitesse de la roue ($V(t)$) ;
- appliquer une correction dynamique sur la commande de freinage, la correction dynamique étant fonction de la commande de freinage et de la vitesse de la roue ($V(t)$), la correction dynamique comprenant l'étape de produire une commande de freinage corrigée ($C_{corr}$) supérieure à la commande de freinage lorsque la vitesse de la roue est supérieure ou égale à un seuil de vitesse prédéterminé ($S_v$), puis l'étape de réduire la commande de freinage corrigée lorsque la vitesse de la roue devient inférieure au seuil de vitesse prédéterminée, de sorte que la commande de freinage corrigée devient inférieure à la commande de freinage ;
- piloter l'actionneur de freinage du frein de la roue en utilisant la commande de freinage corrigée.

2. Procédé de freinage selon la revendication 1, dans lequel la correction dynamique consiste à multiplier la commande de freinage par un coefficient de correction ($C_c$) qui dépend de la commande de freinage ($C_{om}$) et de la vitesse de la roue ($V(t)$) .

3. Procédé de freinage selon la revendication 2, dans lequel, pour une commande de freinage donnée, lorsque la vitesse de la roue ($V(t)$) est supérieure ou égale au seuil de vitesse prédéterminé ($S_v$), le coefficient de correction ($C_c$) a une valeur constante qui dépend uniquement de la commande de freinage donnée.

4. Procédé de freinage selon la revendication 3, dans lequel la valeur constante est une fonction croissante de la commande de freinage ($C_{om}$).

5. Procédé de freinage selon la revendication 2, dans lequel le coefficient de correction ($C_c$) est borné par un coefficient de correction minimal ($C_{cmin}$) et par un coefficient de correction maximal ($C_{cmax}$).

6. Procédé de freinage selon la revendication 2, dans lequel, pour une commande de freinage donnée, lorsque la vitesse de la roue ($V(t)$) est inférieure au seuil de vitesse prédéterminé ($S_v$), le coefficient de correction ($C_c$) est une fonction linéaire croissante de la vitesse de la roue (($V(t)$).

7. Procédé de freinage selon la revendication 6, dans lequel la pente de la fonction linéaire est une fonction croissante de la commande de freinage ($C_{om}$).

8. Procédé de freinage selon la revendication 6, dans lequel une valeur du coefficient de correction ($C_c$), à vitesse de la roue nulle, est une fonction décroissante de la commande de freinage ($C_{om}$).

9. Procédé de freinage selon la revendication 6, dans lequel, quelle que soit la commande de freinage ($C_{om}$), la fonction linéaire passe par un même point (P) défini par une valeur de vitesse de roue prédéfinie ($V_p$) et une valeur de coefficient prédéfinie.

10. Procédé de freinage selon la revendication 9, dans lequel la valeur de coefficient prédéfinie est égale à 1.

**Patentansprüche**

1. Bremsverfahren zum Bremsen von zumindest einem Rad (2) eines Luftfahrzeugs, wobei das Rad mit einer Bremse (3) versehen ist, die zumindest einen Bremsaktor aufweist, wobei das Verfahren die Schritte umfassend, dass:

   - ein Bremsbefehl ($C_{om}$) aus einem Bremssollwert (Cf) generiert wird;
   - eine Radgeschwindigkeit ($V(t)$) geschätzt und/oder gemessen wird;
   - eine dynamische Korrektur auf den Bremsbefehl angewendet wird, wobei die dynamische Korrektur von dem Bremsbefehl und von der Radgeschwindigkeit ($V(t)$) abhängig ist, wobei die dynamische Korrektur den Schritt umfasst, dass ein korrigierter Bremsbefehl ($C_{corr}$) mit höherer Bremskraft als der ursprüngliche Bremsbefehl erzeugt wird, wenn die Radgeschwindigkeit größer oder gleich einem vorbestimmten Geschwindigkeitsschwellenwert ($S_v$) ist, und anschließend den Schritt umfasst, dass der korrigierte Bremsbefehl bremskraftreduziert wird, wenn die Radgeschwindigkeit unter den vorbestimmten Geschwindigkeitsschwellenwert abfällt, sodass der korrigierte Bremsbefehl eine geringere Bremskraft als der ursprüngliche Bremsbefehl aufweist;
   - der Bremsaktor der Radbremse mithilfe des korrigierten Bremsbefehls angesteuert wird.

2. Bremsverfahren nach Anspruch 1, wobei die dynamische Korrektur darin besteht, dass der Bremsbefehl mit einem Korrekturkoeffizienten ($C_c$) multipliziert wird, der von dem Bremsbefehl ($C_{om}$) und von der Radgeschwindigkeit ($V(t)$) abhängig ist.

3. Bremsverfahren nach Anspruch 2, wobei, wenn die Radgeschwindigkeit ($V(t)$) größer oder gleich dem vorbestimmten Geschwindigkeitsschwellenwert ($S_v$) ist, der Korrekturkoeffizient ($C_c$) für einen gegebenen Bremsbefehl einen konstanten Wert aufweist, der ausschließlich von dem Bremsbefehl abhängig ist.

**4.** Bremsverfahren nach Anspruch 3, wobei der konstante Wert eine steigende Funktion des Bremsbefehls ($C_{om}$) darstellt.

**5.** Bremsverfahren nach Anspruch 2, wobei der Korrekturkoeffizient ($C_c$) durch einen minimalen Korrekturkoeffizienten ($C_{cmin}$) und durch einen maximalen Korrekturkoeffizienten ($C_{cmax}$) begrenzt wird.

**6.** Bremsverfahren nach Anspruch 2, wobei, wenn die Radgeschwindigkeit ($V(t)$) kleiner als der vorbestimmte Geschwindigkeitsschwellenwert ($S_v$) ist, der Korrekturkoeffizient ($C_c$) für einen gegebenen Bremsbefehl eine steigende lineare Funktion der Radgeschwindigkeit (($V(t)$) darstellt.

**7.** Bremsverfahren nach Anspruch 6, wobei die Neigung der linearen Funktion eine steigende Funktion des Bremsbefehls ($C_{om}$) ist.

**8.** Bremsverfahren nach Anspruch 6, wobei ein Wert des Korrekturkoeffizienten ($C_c$) bei Radgeschwindigkeit Null eine abnehmende Funktion des Bremsbefehls ($C_{om}$) darstellt.

**9.** Bremsverfahren nach Anspruch 6, wobei die lineare Funktion, unabhängig von dem Bremsbefehl ($C_{om}$), durch ein und denselben Punkt (P) verläuft, der durch einen vordefinierten Radgeschwindigkeitswert ($V_p$) und durch einen vordefinierten Koeffizientenwert definiert ist.

**10.** Bremsverfahren nach Anspruch 9, wobei der vordefinierte Koeffizientenwert gleich 1 ist.

**Claims**

**1.** Method for braking at least one wheel (2) of an aircraft, the wheel being provided with a brake (3) having at least one braking actuator, comprising the steps of:

generating a braking command ($C_{om}$) on the basis of a braking setpoint ($C_f$);
estimating and/or measuring a wheel speed ($V(t)$);
applying a dynamic correction to the braking command, the dynamic correction being a function of the braking command and of the wheel speed ($V(t)$), the dynamic correction comprising the step of producing a corrected braking command ($C_{corr}$) greater than the braking command when the wheel speed is greater than or equal to a predetermined speed threshold ($S_v$), and then the step of reducing the corrected braking command when the wheel speed becomes less than the predetermined speed threshold, with the result that the corrected braking command becomes less than the braking command;
controlling the braking actuator of the brake of the wheel by using the corrected braking command.

**2.** Braking method according to claim 1, wherein the dynamic correction consists of multiplying the braking command by a correction coefficient ($C_c$) which depends on the braking command ($C_{om}$) and on the wheel speed ($V(t)$).

**3.** Braking method according to claim 2, wherein, for a given braking command, when the wheel speed ($V(t)$) is greater than or equal to the predetermined speed threshold ($S_v$), the correction coefficient ($C_c$) has a constant value which depends only on the given braking command.

**4.** Braking method according to claim 3, wherein the constant value is an increasing function of the braking command ($C_{om}$).

**5.** Braking method according to claim 2, wherein the correction coefficient ($C_c$) is limited by a minimum correction coefficient ($C_{cmin}$) and by a maximum correction coefficient ($C_{cmax}$).

**6.** Braking method according to claim 2, wherein, for a given braking command, when the wheel speed ($V(t)$) is less than the predetermined speed threshold ($S_v$), the correction coefficient ($C_c$) is an increasing linear function of the wheel speed (($V(t)$).

**7.** Braking method according to claim 6, wherein the slope of the linear function is an increasing function of the braking command ($C_{om}$).

**8.** Braking method according to claim 6, wherein a value of the correction coefficient ($C_c$), at zero wheel speed, is a decreasing function of the braking command ($C_{om}$).

**9.** Braking method according to claim 6, wherein, whatever the braking command ($C_{om}$), the linear function passes through one same point (P) defined by a predefined wheel speed value ($V_p$) and a predefined coefficient value.

**10.** Braking method according to claim 9, wherein the predefined coefficient value is equal to 1.

Fig. 1

Fig. 2

**Fig. 3**

Fig. 4

Fig. 5

**Fig. 6**

**EP 4 054 906 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3007096 B1

- EP 2853487 A1